# EUROPEAN PATENT APPLICATION

(11) **EP 1 876 829 A1**
(43) Date of publication of application: **09.01.2008**
(21) Application number: 06732264.4
(22) Date of filing: 24.04.2006
(51) Int. Cl.: H04N 7/18, B60Q 1/24, B60R 1/00, B60R 21/00

(54) **VEHICLE VICINITY MONITORING SYSTEM**

(30) Priority: 28.04.2005 JP 2005131419; 28.04.2005 JP 2005131420; 28.04.2005 JP 2005131421
(71) Applicant: AISIN SEIKI KABUSHIKI KAISHA, Kariya-shi, Aichi-ken 448-8650 (JP)
(72) Inventor: KAKINAMI, Toshiaki, c/o AISIN SEIKI KABUSHIKI KAISHA, Kariya-shi, Aichi, 448- 8650 (JP)
(74) Representative: Kramer - Barske - Schmidtchen
(86) International application number: PCT/JP2006/308553
(87) International publication number: WO 2006/118076

(57) **Abstract**

To provide a vehicle vicinity monitoring system enabling an obstacle border to be extracted, even under dark conditions, without any adverse effect caused by an obstacle shadow created by the illuminating of vehicle illumination devices.

The vehicle vicinity monitoring system captures images of the vicinity of the vehicle using an image-capturing device 3, and uses a notification device 6 to provide vehicle occupants with information concerning obstacles in the vicinity of the vehicle. A primary lighting device 4 and/or a secondary lighting device 4 are provided to the vehicle.

The primary lighting device 4 directs light upon shadows cast within the imaging field of the image-capturing device 3 as a result of the illumination device being illuminated. The secondary lighting device 4 is a lighting device for projecting light in a prescribed pattern within the imaging field of the image-capturing device in order to confirm the existence of an obstacle.

## Description

### TECHNICAL FIELD

The present invention relates to a vehicle vicinity monitoring system for providing vehicle occupants with information related to obstacles existing in the vicinity of a vehicle.

### BACKGROUND ART

An invention for a vicinity monitoring device used as such a vehicle vicinity monitoring system is described in Patent Document 1, listed below. That vicinity monitoring device monitors the environment in the vicinity of a moving object such as a vehicle, and displays an image of a visual field from a desired location. Patent Document 1 gives an example of a device for monitoring the vicinity of a vehicle, and appropriately displaying objects that form an obstacle to parking. That device utilizes a camera on the rear of the vehicle for capturing images. Additionally, that device performs graphics calculations and parking guidance calculation operations utilizing a CPU, based on information such as obtained images, vehicle travel speed, steering state, and turning state. The results of those calculations are displayed on a monitor within the vehicle.
Patent Document 1:JP 2005-20558 A (Paragraphs 20 through 29, FIG. 5)

### DISCLOSURE OF THE INVENTION

### Problems That the Invention Is Intended to Solve

The camera mounted on the rear of the vehicle can obtain a good image during the day or in other conditions where the surroundings are well lit. The resulting image undergoes a variety of image processing procedures. As an example, border enhancement or edge detection can be performed, so as to clarify the boundary between for example the road surface and obstacles such as vehicles parked in the vicinity of the vehicle. During the day, or in other conditions where the surroundings are well lit, the obtained image will have sufficient contrast such that border enhancement or edge detection can be performed.

At night, however, or in other conditions where the surroundings are dark, lack of sensitivity of the camera makes it difficult to obtain an image with sufficient contrast. Because of this illumination devices such as tail lamps or reverse lamps are often illuminated so as to brighten the area to be photographed in an effort to provide obtained images with sufficient contrast. However, such an approach is problematic in that when the target vehicle is a dark color such as black or dark blue, shadows of the vehicle cast by the illumination device, as well as contrast with the vehicle are sometimes lessened. Thus, when the illumination devices are lit, the contrast of the captured image will be lower than that during the day because the area will be darker than during daytime. This leads to a further weakening of the contrast between darkly colored vehicles and their shadow, creating a barrier to accurate border enhancement and edge detection.

With the foregoing problems in view, it is an object of the invention of the present application to provide a vehicle vicinity monitoring system that makes obstacle border extraction possible even under dark conditions, such as at night, without being affected by the shadows of obstacles created by the illumination of vehicle lighting devices.

### Means for Solving the Problems.

In order to achieve the aforesaid object, the vehicle vicinity monitoring system pertaining to the present invention uses an image-capturing device to photograph a scene in the vicinity of the vehicle, and uses a notification device to provide vehicle occupants with information concerning obstacles in the vicinity of the vehicle. The system is constituted as described hereunder.
The vehicle vicinity monitoring device is characterized in that a primary lighting device, or a secondary lighting device, or both the primary lighting device and the secondary lighting device, are provided to the vehicle.
The primary lighting device is a lighting device wherein the illumination of the illumination device provided to the vehicle directs light on an obstacle shadow created within the imaging field of the image-capturing device, whereby the shadow is minimized and the border of the obstacle is made to stand out.
The secondary lighting device is a lighting device for projecting light in a prescribed pattern within the imaging field of the image-capturing device for the purpose of confirming the existence of the obstacle.

The position of the obstacle to be detected, including whether or not the obstacle exists, is unknown. However, the installation positions of the image-capturing device and the illumination device for shining light on the obstacle using illumination are known. Therefore, in the event that an obstacle exists, it is possible to ascertain in advance the relationship between the obstacle position and the shadow created by the illumination from the illumination device, as well as the position of the shadow within the imaging field.
It is therefore possible to determine in advance a direction (the prescribed direction) that will include the boundary portion between the shadow (background) and the obstacle. Light can then be directed so as to encompass the prescribed direction, thereby lightening the shadows encompassed by the imaging field, and causing the border of the obstacles to stand out.
The border portion will change depending upon the position where the obstacle exists. The illuminating light that is directed must therefore be of a certain width so as to encompass the prescribed direction. On the other hand, if the obstacle is far away from the vehicle, there is little immediacy for the border of the obstacle to be extracted. In other words, it is acceptable for the boundary between the obstacle and the background to be indistinct.
Therefore, when the object is presumed to be located nearby, it will be sufficient as a minimum if a direction that will encompass the boundary portion when illuminated is selected as the prescribed direction. The primary lighting device can thus be positioned so as to illuminate an area that will encompass the boundary portion between an obstacle of unknown location and existence, as well as the background.
As a result it is possible to remove the effects of the shadow and satisfactorily extract the border of the obstacle, while also providing vehicle occupants with information concerning the obstacle via a monitor or other device within the vehicle.

In the vehicle vicinity monitoring system of the present invention, the primary lighting device described above, or a secondary lighting device as described below, or a combination of both the primary and secondary lighting systems, are provided to the vehicle. The secondary lighting device is a lighting device for projecting light containing a prescribed pattern into the imaging field of the image-capturing device.
Light reflected from an obstacle that has been illuminated with the light having a specific pattern enters the image-capturing device, and a pattern image applicable to the prescribed pattern is recreated in the captured image.
Light that contains a specified pattern and has been reflected from a ground surface (road surface) or wall surface, on the other hand, will be formed as a captured image that is different from the pattern image formed by reflection from an obstacle. This is because roads and walls occupy a position in three-dimensional space that is different from that of obstacles. Alternatively, because [roads and walls] are farther away than obstacles, illuminating light and reflected light will be dimmer, and a pattern image will not be formed.
As a result, pattern images that appear in a captured image will have discontinuities at the boundary between obstacles that appear to exist on the same plane in a two-dimensional captured image and the background (ground surfaces or wall surfaces) of the obstacles.
In a normal captured image, the boundary between an obstacle and its shadow may be indistinct, as described above. However, by using a secondary lighting device, it is possible to clearly distinguish the boundary using the discontinuity of the pattern image created at the boundary of the obstacle and its shadow.
As a result, it becomes possible to extract the boundary of the obstacle without its shadow causing any adverse effect thereon, even when the vicinity of the vehicle is under darker conditions relative to daytime.

The vehicle vicinity monitoring system pertaining to the present invention is further characterized in that a direction that is the same as the angle of vision from the image-capturing device to the obstacle is used as a reference, and the primary lighting device directs light outward from the vehicle relative to that direction.

As described above, the primary lighting device may be able to illuminate the boundary area between an obstacle and the background. Therefore, directing light at least in the same direction as the angle of vision from the image-capturing device to the obstacle enables the obstacle shadow created by the illuminated lighting device to be made lighter within the imaging field. In other words, shadows of obstacles can be satisfactorily minimized if the lighting device directs light outward from the vehicle in the width direction, using the same direction as the angle of vision as a reference.

The vehicle vicinity monitoring system pertaining to the present invention is further characterized in that a plurality primary lighting devices is provided, and the lighting devices direct light in prescribed directions to the left and right of the vehicle in the width direction thereof.

In the width direction of the vehicle, there is a side that is easily seen by the vehicle driver, and a side that is not easily seen. Therefore, some benefit can be obtained if there exists at a minimum a primary lighting device that illuminates the side that is not easily seen by the driver. However, an effective vehicle vicinity monitoring system that is not limited by the ease of visual verification can be provided by implementing a plurality of primary lighting devices for eliminating the effect of the shadows of obstacles on both sides of the vehicle.

The vehicle vicinity monitoring system pertaining to the present invention is further characterized in being provided with movement state detecting means for detecting the direction in which the vehicle is traveling, and in that the primary lighting devices direct light according to the results of the detection obtained from the movement state detecting means.

According to this configuration, light can be directed from the primary lighting device only when so required. Should the primary lighting device constantly emit light, then when vehicle vicinity monitoring is not required in that direction, light will be unnecessarily emitted, which is also undesirable from a standpoint of lowering energy usage by the vehicle. When a plurality of primary lighting devices is provided, and they constantly emit light in all directions, then wasteful illumination is provided in directions in which vehicle vicinity monitoring is not required, as in the case above. It is possible to minimize the amount of power wasted through wasteful illumination by using the movement state detecting means for determining the direction in which the vehicle is traveling, and using the detection results to illuminate the side requiring vicinity monitoring.

The vehicle vicinity monitoring system pertaining to the present invention is further characterized in that the image-capturing device is provided to a central area of the vehicle along the width direction, that the primary lighting devices are provided to the left and right sides of the vehicle along the width direction, and that the primary lighting devices collectively direct light on at least the imaging field at their own respective intensity level.

According to this characterizing configuration, a wide-angle primary lighting device, which is capable of collectively directing light on the imaging field of the image-capturing device, directs light in the imaging field. The boundary area between obstacles and the background is contained within this field of illumination, allowing for lessening of the shadow cast by the illumination device. The contrast between an obstacle and the background is accordingly increased.
Additionally, the individual illumination intensity levels of each of the primary lighting devices (a non-illuminated state being included in the illumination intensity levels) are independent. Therefore, for example, should the direction of vehicle travel be used to determine a side of the vehicle for which vicinity monitoring is necessary (a side either to the right or left of the direction of travel), the illumination intensity of the primary lighting device can be controlled. Specifically, it is possible to provide illumination using only the primary lighting device on the side opposite of the side requiring vicinity monitoring.
It is accordingly possible to have the directed light reach away from the vehicle in the width direction (to the right or left of the direction of travel) towards to the shadow of an obstacle. As a result, the effect of shadows within the viewing angle of the image-capturing device can be adequately removed.

The vehicle vicinity monitoring system pertaining to the present invention is also characterized in that the primary lighting devices provided to the right and the left of the vehicle in the width direction switch between illumination intensities so that one of the illumination intensities is stronger and the other illumination intensity is weaker.

By comparing the images obtained under such illumination, image processing can make an effective distinction between an obstacle in the form of a real object, and the shadow of that object.
As described above, light from a primary lighting device provided to the side opposite the side on which the obstacle is located is able to reach away from the vehicle in the width direction toward the shadow of the obstacle. Accordingly, the effect of the shadow can be adequately eliminated in regard to the viewing angle of the image-capturing device. On the other hand, light from a lighting device that is provided to the same side as the obstacle will form a shadow of the obstacle within the imaging field of the image-capturing device, as occurs with the illumination from an illumination device. Therefore, the image-capturing device will obtain differing images, depending on the light from each of the two primary lighting devices.

The illumination intensity of the primary lighting devices may be switched according to the detection results of the movement state detecting means as described above.
By doing so, it is possible for the primary lighting device to direct light only when so required, and only in the direction required. As a result, it is possible to lessen the amount of power wasted through unneeded illumination, and to conserve energy.

The vehicle vicinity monitoring system pertaining to the present invention is also characterized in that the secondary lighting device directs light in a prescribed direction on at least the left or right of the vehicle in the width direction.

The position of the obstacle that is the target of detection, including whether the obstacle exists or not, is unknown. However, the installation positions of the illumination device that shines light on the obstacle when illuminated and the position of the image-capturing device are known. Therefore, in the event that an obstacle exists, it is possible to ascertain in advance the relationship between the obstacle position and the shadow created by the illumination from the illumination device, as well as the position of the shadow within the imaging field.
It is therefore possible to determine in advance a direction (the prescribed direction) that will include the boundary portion between the shadow (background) and the obstacle. Light can then be directed in the prescribed direction, and thereby projected on both the obstacle and the background.
When a specified pattern is projected upon both the obstacle and the background, the image-capturing device can obtain a reconstructed image of the specified pattern that shows discontinuities at the boundary area, as described above. As a result, it becomes possible to provide a system capable of extracting the boundary of the obstacle without any adverse effects caused by the obstacle shadow, even when the vicinity of the vehicle is under darker conditions than in daytime.

The boundary portion will change depending upon the position where the obstacle exists. It is therefore necessary for the illuminating light directed in the prescribed direction to have a certain amount of breadth. On the other hand, if the obstacle is far away from the vehicle, there is little immediacy in the need to extract the border of the obstacle. In other words, it is acceptable for the boundary between the obstacle and the background to remain indistinct.
Therefore, when the object is presumed to be located nearby, it will be sufficient as a minimum if a direction that will encompass the boundary portion when illuminated is selected as the prescribed direction. The primary lighting device can thus be positioned so as to illuminate an area that will encompass the boundary portion between an obstacle of unknown location and existence, as well as the background.
Preferably, the above conditions would be fulfilled by having the center of the optical axis be the same direction as the viewing angle from the image-capturing device to the obstacle, and projecting light of a certain width in that direction. Therefore, one embodiment that would yield a favorable projection would involve providing the secondary lighting device in the same position as the image-capturing device in the width direction of the vehicle, and projecting from that position in at least one of the prescribed directions (the viewing angle direction) on the left or right of the vehicle.

Illumination from the secondary lighting device is reflected by obstacles, and a pattern image according to the prescribed pattern can be created by using the image-capturing device to capture that reflected light.
Therefore, ideally, the patterned light should be projected at an angle such that the patterned illuminated light is reflected directly by the obstacle. In other words, the patterned light is projected at an angle such that light is reflected directly back into the image-capturing device mounted on the vehicle. For example, in the case that the obstacle is located behind the vehicle, projecting in such a manner is possible. However, in a case where the obstacle is located to the side of the vehicle, it would be necessary to project light in the prescribed pattern from far behind the vehicle, which is not practical.

It is accordingly preferred that the secondary lighting device be provided so as to project in a direction away from the vehicle relative to the direction that is the same as the viewing angle from the image-capturing device to the obstacle. One embodiment would be for the image-capturing device to be provided to a center area, and to project from the side opposite the side of the vehicle along the width direction on which the obstacle is present. Doing so would allow for a deeper angle relative to the obstacle; i.e., an angle in a direction that is close to mirror-reflected light with regard to the viewing angle from the image-capturing device to the obstacle.

Moreover, in the width direction of the vehicle, there is a side that is easily seen by the driver of the vehicle, and one that is not easily seen. Therefore, some benefit can be obtained if the secondary lighting device illuminates at a minimum the side that is not easily seen by the driver.
However, it is more preferable for multiple secondary lighting devices to be provided or for a single secondary lighting device to project in multiple directions.
In a case where multiple secondary lighting devices are provided, they can also be made capable of projecting only when required, and only in the direction required. Should the secondary lighting device project constantly, it would project unnecessarily in directions where vicinity monitoring is not required, which is also undesirable from a standpoint of lowering vehicle energy usage.
It is accordingly preferable, for example, to provide movement state detecting means or the like to detect the direction in which the vehicle is traveling, and to use the results of the detection so that projection is only performed in the direction required, and only when necessary.

The vehicle vicinity monitoring system related to the present invention is also characterized in that the prescribed pattern is one of a straight-line slit pattern, a lattice pattern or a dotted pattern.

In the case where a slit pattern is used, a pattern image is recreated along the obstacle, and the areas in the pattern image where the lines are broken can be taken as the boundary. Therefore, the boundary between the obstacle and the background can be optimally found.
Or, in the case of a lattice pattern, the boundary can be found according to the linearity of the two directions of orthogonal crossings. It is accordingly possible to determine the boundary in multiple directions. Alternatively, the boundary can be found according to the presence or absence of square patterns in the lattice.
In the case where a dotted pattern is used, the presence or absence of the recreation of dotted patterns can be used to find boundaries according to the surface shape of the obstacle.

The vehicle vicinity monitoring system related to the present invention is also characterized in that the image-capturing device has a sensitivity to near-infrared light; and the secondary lighting device projects light that includes, in whole or in part, near-infrared light.

By including invisible near-infrared light in the illuminating light, it is possible to optimally find these boundaries not only in cases where the effects of shadows need to be controlled, but also when boundaries between the obstacle and the background are indistinct due to a lack of brightness in the surrounding area. Additionally, because a pattern of visible light is not projected onto the obstacles, vicinity monitoring can be performed without causing discomfort to bystanders.

It is also preferred that the first lighting device and the second lighting device be provided to the image-capturing device.
As described above, the primary lighting device needs only to illuminate the boundary area between an obstacle and the background. Therefore, by illuminating at a minimum in the same direction as the angle of vision from the image-capturing device to the obstacle, it is possible to eliminate shadows of the obstacle created by the light from the illumination device within the imaging field. In other words, the shadows of obstacles can be effectively minimized if the lighting device directs light away from the vehicle in the width direction, using the same direction as the angle of vision is used as a reference.
Therefore, by providing a lighting device (the primary lighting device) to the image-capturing device, at a minimum it will be possible to provide illumination in a direction approximately the same as the viewing angle. It is also necessary to adjust the directionality of the illuminating light when installing the lighting device, and such adjusting is facilitated by the lighting device being provided to the image-capturing device.

Also, as explained above, when light with the specified pattern is projected so as to include the boundary portion between the shadow (the background) and the obstacle, it is possible to project the light with the specified pattern within the imaging field containing the obstacle and the background. When a specified pattern is projected upon both the obstacle and the background, the image-capturing device can obtain a reconstructed image of the specified pattern that shows discontinuities at the boundary area, as described above.
As with the illumination produced by the primary lighting device described above, the secondary lighting device may project the prescribed pattern on the obstacle and the background, including the boundary area as a minimum. In other words, it is sufficient for the same direction as the viewing angle from the image-capturing device to the obstacle to be used as the center optical axis, and for illuminating light to be projected in a prescribed width in that direction. Therefore, by providing a lighting device (the secondary lighting device) to the image-capturing device, at a minimum it will be possible to illuminate in a direction that is the same as the viewing angle. It is also necessary to adjust the directionality of the illuminating light when installing the lighting device, and such adjustments are facilitated by having the lighting device provided to the image-capturing device.

The vehicle vicinity monitoring system pertaining the present invention is also characterized in that the primary lighting device is provided to one of the illumination devices of the vehicle, and the illumination device is one of a brake lamp, tail lamp, reverse lamp, turn signal, license plate lamp, or a combination lamp that comprises a plurality of these.

As described above, an object of the present invention is to provide a vehicle vicinity monitoring system that allows the obstacle border to be extracted even at night or under other dark conditions, without any adverse effect caused by the shadows of obstacles created by the illumination of vehicle illumination devices.
There are multiple illumination devices provided to the vehicle, and there are other illumination devices besides the illumination devices that generate shadows from obstacles. Therefore, by providing the lighting device (the primary lighting device) to the illumination device, it is possible to direct (project) light from an angle that is different from that of the illumination device creating the obstacle shadows.
Also, because the positional relationship between mutual illumination devices is known, it is possible to estimate in advance the positional relationship between the illumination device that creates obstacle shadows and the illumination device to which is provided the lighting device used to minimize the effect of the shadows. Also, an optimal vehicle vicinity monitoring system can be constructed because it is possible to finely control the direction in which the lighting device directs (projects) light.
The illumination device can also be an illumination device that illuminates for the purpose of increasing the brightness of the imaging field. Control lines and power supply lines are laid for the illumination device in order to control lighting and extinguish the illumination device. Therefore, by providing the lighting device to the illumination device it is possible for the use of control lines and power supply lines to be shared, reducing the number of lines found in the vehicle overall. Doing so also allows for integrated construction of optical components in the illumination device and the lighting device, which is beneficial from an economic and manpower standpoint.

The secondary lighting device can also be provided to an illumination device on the vehicle. The illumination device may include one of the brake lamps, tail lamps, reverse lamps, turn signals, license plate lamps, or a combination lamp that comprises a plurality of these.

The primary lighting device and the secondary lighting device may also be provided to an external part of the vehicle.
As described above, the positional relationship between the image-capturing device and the lighting device (the primary and the secondary lighting device) is important for extracting the obstacle border. Placing the lighting device on an external part allows the positional relationship of the lighting device to be determined from its relationship with the vehicle body, allowing for precise installation of the lighting device.
As a result, it is possible to reduce the amount of labor required for performing adjustments to directional characteristics when installing the lighting device.
Here, "external parts" refers to garnishes, bumpers, or body panels.
The external parts may also be a location where the image-capturing device is installed. Therefore, it is preferable that the positional relationship between the image-capturing device and the lighting device be precisely determined.

### BEST MODE FOR CARRYING OUT THE INVENTION

An embodiment of the present invention will be described below with reference to the accompanying drawings.

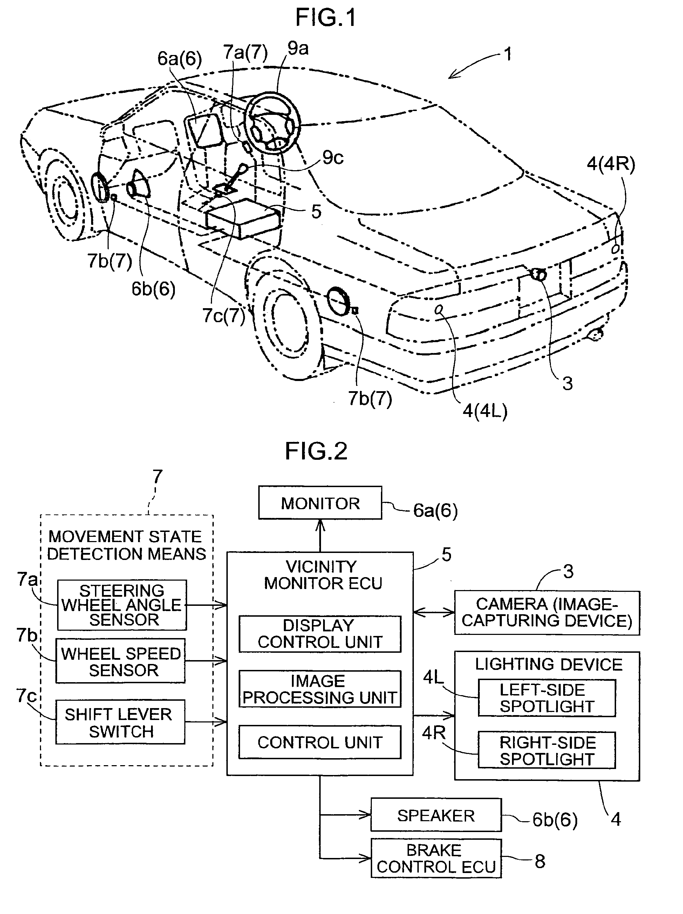

FIG. 1 is a perspective view of an example of the vehicle vicinity monitoring system pertaining to the present invention when mounted onto a vehicle. FIG. 2 is a block diagram depicting an overview of the vehicle vicinity monitoring system pertaining to the present invention.
A vehicle 1 as depicted in FIG. 1 is a mobile object on which is mounted the vehicle vicinity monitoring system pertaining to the present invention. A camera 3 is provided to the vehicle 1 as an image-capturing device so as to capture images of a rear view of the vehicle 1. The image-capturing device may be provided to the front side of the vehicle 1, and may be provided to both the front side and the rear side. In the present embodiment, an example of a rear installation is used for descriptive purposes. The vehicle 1 is also provided with an additional lighting device 4, which differs from illumination devices such as front positioned lights. This lighting device 4 is described below.

Images taken by the camera 3 are input to a vicinity monitor ECU (Electronic Control Unit) 5, where image processing is performed by an image processing unit to perform border extraction and edge enhancement. Passengers(occupants) are notified of the results of the image processing via the notification device 6, which comprises a monitor 6a and a speaker 6b.
In addition to an image processing unit, the vicinity monitor ECU 5 also comprises a control unit and a display control unit. The control unit performs various decisions based on the results of image processing. A display control unit is used to control what the monitor 6a is to display. The display control unit is used to display the image obtained by the camera 3, and to superimpose the results of image processing or the results of control unit decisions, or to superimpose resulting images as a guideline.
The results of the control unit decisions are also supplied to other ECUs in the vehicle 1. For example, if information that an obstacle is being approached too closely is transmitted to a motion control ECU 8, the motion control ECU 8 will apply a brake device, halting the vehicle 1.

These decisions are based not only on images captured by the camera 3, but also by taking into account information from a variety of movement state detection means 7. For example, a steering wheel angle sensor 7a for detecting the operation of a steering wheel 9a, a wheel speed sensor 7b, and a shift lever switch 7c for detecting the shift position of a shift lever 9c correspond to the movement state detection means.
Based on information from these movement state detection means, the vicinity monitor ECU 5 calculates the direction of movement, the speed of movement, and the predicted path of travel of the vehicle 1.

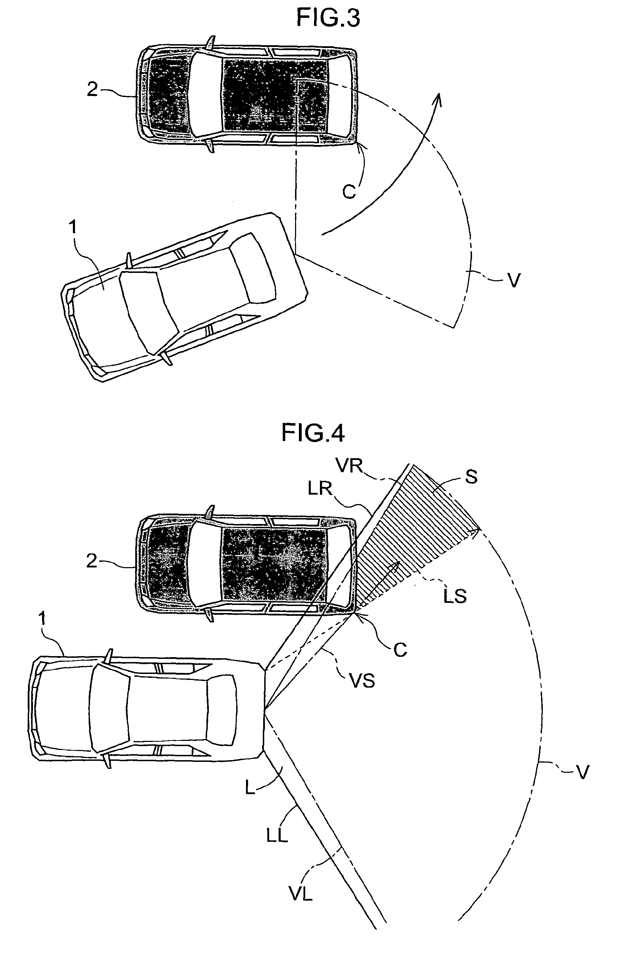

FIG. 3 is a descriptive diagram indicating an initial movement where the vehicle 1 is parallel parking behind a parked vehicle 2, which is used as the obstacle. The vehicle 1 moves towards the rear of the parked vehicle 2, following a path indicated by the arrow in FIG. 3. At this time, the camera 3 on the vehicle 1 captures the scene in an imaging field V.

FIG. 4 is a descriptive diagram that shows an example where a shadow S of the parked vehicle 2 is created in the imaging field V of the camera 3. FIG. 4 shows the vehicle 1 and the parked vehicle 2 in a substantially parallel alignment for simplifying the description. In FIG. 4, the imaging field V formed by the right side limit of visibility VR and the left side limit of visibility VL indicates the angle of vision of the camera 3 mounted on the vehicle 1.
At night or in other situations where the brightness of the environs of the vehicle 1 is insufficient, the brightness will be greater within the range of the angle of vision. The area between the solid line LR and the solid line LL indicates the area where illuminating light reaches when the illumination device (for example, at least a tail lamp, or a brake lamp) provided to the vehicle 1 is illuminated.

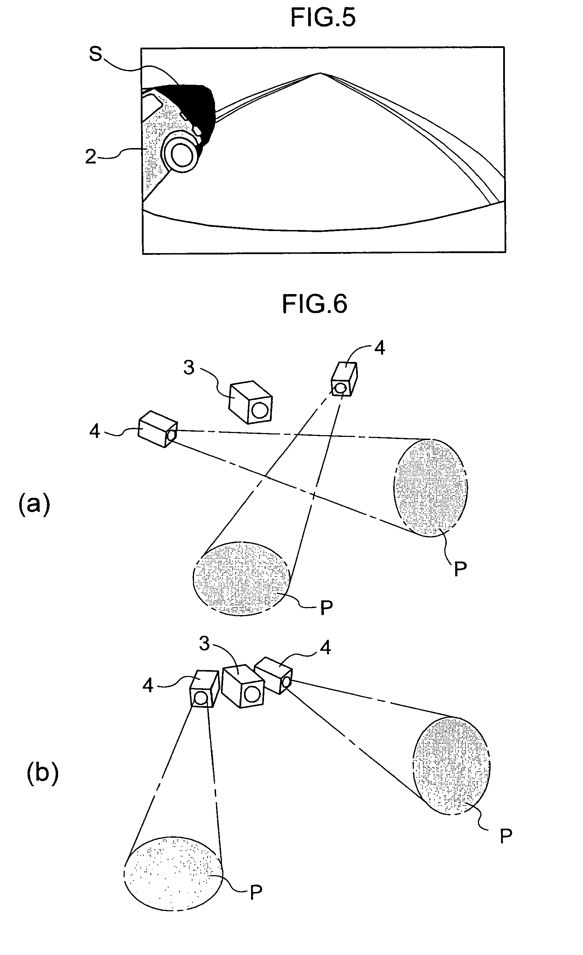

The boundary line of the illuminating light, indicated by the dotted arrow line LS, is the line connecting the corner C, which is the outermost edge of the parked car 2, and the illuminated illumination device. Within the imaging field V, the illuminating light from the illumination device is cut off at the portion located away from the vehicle 1 in the vehicle width direction relative to the boundary line of the illuminating light LS, resulting in a shadow S. As shown in FIG. 4, the angle of vision VS obtained when viewing the corner C of the parked vehicle 2 from the camera 3 (indicated by a solid arrow line) is oriented in a direction away from the vehicle 1 relative to the boundary line of the illuminating light LS. Therefore, the angle of vision VS will capture the shadow S of the parked vehicle 2 created by the illumination device, which provides illumination beyond the corner C of the parked vehicle 2.
As indicated in FIG. 5, the shadow S of the parked vehicle 2 will appear in the captured image as a background area, which normally comprises road and wall surfaces. If the color of the parked vehicle 2 is a dark color such as black or dark blue, the contrast between the parked vehicle 2 and the shadow S will decrease. As a result, distinguishing the boundary area of the parked vehicle 2 will be complicated when image processing is performed by the vicinity monitor ECU 5. In other words, it becomes difficult to perform precise detection of the corner C, which is the most closely approached corner when the vehicle 1 is moving in a manner as shown in FIG. 3.

### (Embodiment 1)

The vehicle vicinity monitoring system pertaining to the present invention prevents the dark shadow S from being included in the captured image to an extent that contrast with the parked vehicle 2 is lowered. It is not necessary to completely eliminate the shadow S. It is sufficient to lighten the shadow S to provide a level of contrast allowing the vicinity monitor ECU 5 to sufficiently distinguish between the parked vehicle 2 and the background.
The vehicle vicinity monitoring system pertaining to the present invention includes a lighting device 4 (the primary lighting device) as supplemental illumination means, separate from the illumination device which generated shadows from obstacles, for the purposes of lightening the shadow S. As a minimum, the lighting device 4 directs light outward from the vehicle 1 relative to the angle of vision VS. It is preferable that light from this lighting device 4 be directed while the illumination device is in an illuminated state. This is because when the illumination device is in an extinguished state, it will often be the case that the vicinity will be bright if it is daytime, or the vehicle 1 is not moving.

FIG. 6 is a descriptive diagram that shows an example of the positioning of the lighting device 4 used as supplemental illumination means, and the camera 3 used as the image-capturing device.
FIG. 6(a) is a sample setup with the illumination device 4 installed a prescribed distance from the camera 3 in the vehicle width direction, directing light to the opposite left/right direction in the width direction of vehicle 1, across from the camera 3. A more detailed description shall be provided hereunder, but this configuration allows for light to be directed away(outward) from the vehicle 1 relative to the angle of vision VS from the camera 3 to the parked vehicle 2, and therefore enables the shadow S to be satisfactorily lightened.
FIG. 6(b) is a sample setup with the illumination device 4 provided to substantially the same position as the camera 3 in the width direction of the vehicle, and light being directed in the same direction as the angle of vision VS of the camera 3. A more detailed description shall be provided hereunder, but with the direction of the angle of vision from the camera 3 to the parked vehicle 2 being taken as a reference, the shadow S can be satisfactorily lightened if light is directed away from the vehicle 1 relative to that direction.

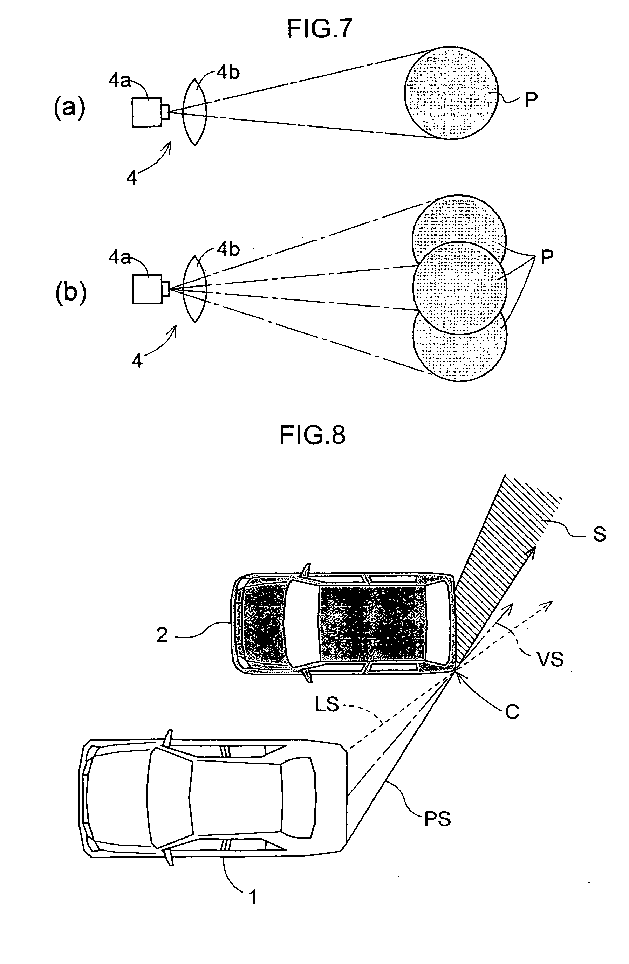

As shown in FIG. 7, in this example the lighting device 4 is equipped with a projector 4a and a lens 4b, allowing for illumination by spot lighting in an area that includes a field of illumination P. This spot lighting P can be a simple spot lighting P as shown in FIG. 7(a), or it can be a plurality of spot lighting P as shown in FIG. 7(b).

FIG. 8 is a descriptive diagram that shows an example where the effects of the shadow S are decreased by the use of a setup as shown in FIG. 6(a). The angle of vision VS of the camera 3 is oriented in a direction away(outward) from the vehicle, beyond the boundary line of illumination LS, which connects the illuminating illumination device and the corner C (the outermost edge of the parked vehicle 2).
However, a beam of light PS, created by the spotlight P from the lighting device 4 provided to the edge on the side opposite the parked vehicle 2, is oriented even further beyond the angle of vision VS. Therefore, on the side closer to the vehicle 1 relative to the beam of light PS, the shadow S will be illuminated by the lighting device 4 and become lighter. As a result, the angle of vision VS will extend beyond the corner C, allowing road surfaces, wall surfaces, and other aspects of the scenery to be seen, and making it possible to lessen the effects of the shadow S.

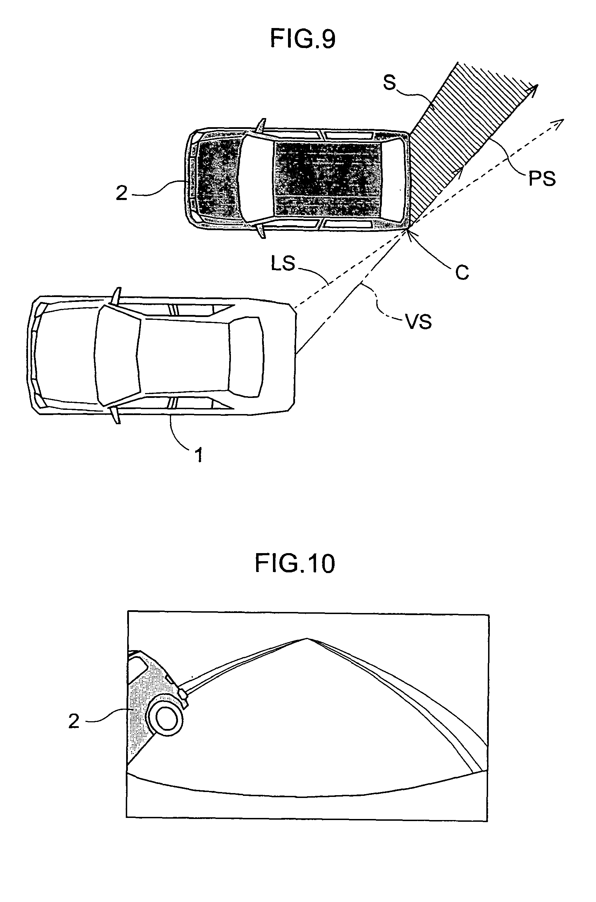

FIG. 9 is a descriptive diagram that shows an example where the effect of the shadow S is reduced by using the setup as shown in FIG. 6(b). The beam of light PS created by a spotlight P from the lighting device 4 installed at the same position as camera 3 in the width direction of the vehicle is approximately the same as the angle of vision PS. The shadow S is illuminated by the lighting device 4 closer to the vehicle 1 relative to the beam of light PS, and the shadow S is thereby lightened. Areas where the shadow S appears darker are on the side away from the vehicle 1 in the width direction, using the angle of vision VS as a reference. As a result, the angle of vision VS will extend beyond the corner C, allowing road surfaces, wall surfaces, and other aspects of the scenery to be seen, and making it possible to lessen the effects of the shadow S.

FIG. 10 shows an example of a captured image taken in FIG. 8 and FIG. 9. In this manner, it is possible to obtain a captured image in which the contrast between the parked vehicle 2 and the background is strong.

### (Embodiment 2)

In Embodiment 2, the captured image is not affected, even when the shadow S is present and is dark enough to reduce contrast with the parked vehicle 2. In other words, the boundary between the parked vehicle 2 and the background in the vicinity monitor ECU 5 can be adequately identified.
The vehicle vicinity monitoring system pertaining to the present invention includes a lighting device 4 (the secondary lighting device) as supplemental illumination means, separate from the illumination device which generated shadows from obstacles.
The lighting device 4 projects light with a prescribed pattern onto the parked vehicle 2 and the background, including at least the angle of vision VS. Moreover, it is preferable that the projection from the lighting device 4 is performed while the illumination device is in an illuminated state. This is because when the illumination device is in an extinguished state, it will often be the case that the vicinity will be bright if it is daytime, or the vehicle 1 is not moving.

As in the case of the first embodiment described above, the description below makes reference to FIG. 6, which is a descriptive diagram depicting an example of the positioning of the lighting device 4 and the camera 3. The positioning of each is as described above, and a description of such will accordingly be omitted here.
If the configuration shown in FIG. 6(a) is adopted, the lighting device 4 projects away from the vehicle 1 relative to the angle of vision VS from the camera 3 to the parked vehicle 2. In other words, it is possible for the illuminating light from the lighting device 4 that is reflected by the parked vehicle 2 and captured by the camera 3 to approximate mirror-reflected light. The amount of light reflected is maximized when the reflection is directly opposite, and this will allow for optimal specified pattern reconstruction by the camera 3.
If the configuration shown in FIG. 6(b) is adopted, the lighting device 4 is able to project illuminating light having the prescribed pattern on both the parked vehicle 4 and the background. Illuminating light from the lighting device 4 is of a prescribed width. Therefore, projecting illuminating light with the prescribed pattern in the direction of the angle of vision VS from the position of the camera 3 makes it possible to project the illuminating light with the specified pattern onto the boundary between the parked vehicle 2 and the background. As a result, it is possible for the camera 3 to clearly capture the boundary of the vehicle.

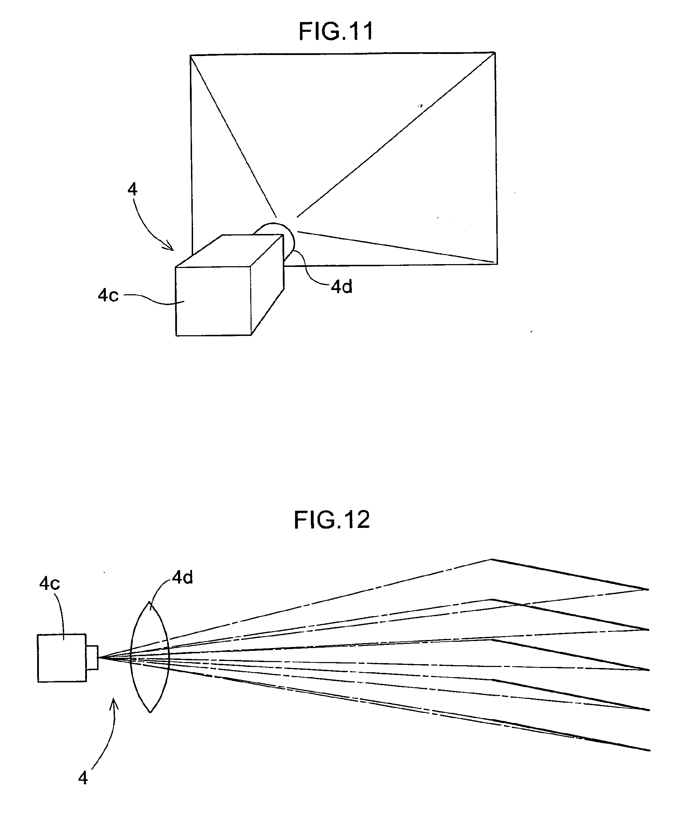

In the present embodiment, the lighting device 4 is provided with a projector 4c and a lens 4d, and illuminating light having a prescribed pattern is projected therefrom, as shown in FIGS. 11 and 12.
FIG. 12 shows an example where light with a straight line slit pattern is projected. FIG. 13 shows an example of a variety of prescribed patterns, including light with a straight line slit.
FIG. 13(a) shows a horizontal straight line pattern. Using a pattern like this one allows for the boundaries to be satisfactorily located according to whether the continuity in a horizontal direction is disrupted.
FIG. 13(b) shows a vertical straight line pattern. Using a pattern like this one allows for the boundaries to be satisfactorily located according to whether the continuity in a vertical direction is disrupted.
FIG. 13(c) shows a lattice pattern. Using a pattern like this one allows for the boundaries to be satisfactorily located according to according to whether the continuity in the vertical and horizontal directions are disrupted. Alternatively, the boundary can be found according to the shape of the surface of the obstacle by the presence or absence of replication of the square pattern in the lattice.
FIG. 13(d) is a dotted pattern. In this case, too, the boundary can be found according to the shape of the surface by the presence or absence of replication of the dotted pattern.

FIG. 14 shows an example of a captured image taken with the prescribed pattern of FIG. 13(a) being projected by the lighting device 4. The straight line pattern will only be replicated in locations where the parked vehicle 2 exists. In this manner, it is possible to use discontinuities in the straight line pattern to determine the boundary between the parked vehicle 2 and the background from the captured image, even when the contrast between the parked vehicle 2 and the background is low.

It is also possible to adopt a configuration so that light projected by the lighting device 4 includes, in whole or in part, near-infrared light. In such cases, the camera 3 is assumed to be sensitive to near-infrared light. Near-infrared light is not visible light, and so it is possible to optimally find these boundaries not only in cases where the effects of the shadows need to be controlled, but also when boundaries between the obstacle and the background are indistinct due to a lack of brightness in the environs. Additionally, because visible light is not projected onto the parked vehicle 2, vicinity monitoring can be performed without causing discomfort to third-party viewers.

### (Modifications of Embodiments 1 and 2)

Two lighting devices 4 are provided in FIGS. 1, 2, and 6, which are all referenced in Embodiments 1 and 2. However, the two lighting devices 4 do not necessarily have to be provided when the present invention is used.
For example, it is possible to not provide a lighting device 4 for directing (projecting) light onto the side of the vehicle that is easily viewed from the driver's seat, and only install a lighting device 4 that directs (projects) light onto the side of the vehicle that is not easily viewed from the driver's seat.
However, when multiple lighting devices 4 are installed, as in the embodiments above, it is possible to create an optimal vicinity monitoring system without being constrained by the ease of visibility from the driver's seat. Therefore, the direction of illumination (projection) of lighting device 4, even when there is only one, is taken as being variable, and a configuration can be adopted wherein one lighting device 4 directs (projects) light in a plurality of directions. An alternative configuration may be adopted wherein only one of two lighting devices 4 is used to direct (project) light.

In the event that one lighting device 4 is selected or the direction in which light is directed (projected) thereby is changed, control will be based upon the detection results of the movement state detection means 7.
As described above, the movement state detection means 7 comprises a steering wheel angle sensor 7a, a wheel speed sensor 7b, and a shift lever switch 7c. It is possible to determine that the direction of movement will be, e.g., to the rear by detecting that the shift lever switch 7c is in the reverse gear. It is also possible to learn whether the vehicle will be moving in a right or left direction using the steering wheel angle sensor 7a to detect the angle at which the steering wheel 9a is being operated. It is also possible to learn whether the vehicle will be moving in a right or left direction using the wheel speed sensor 7b to detect the difference in speed of the left and right wheels of the vehicle. Furthermore, it is possible to learn the speed in which the vehicle is moving at that time.

### (Lighting device installation embodiment)

The following illustrates a variety of examples of a lighting device installation embodiment. The description will be provided using a station wagon-type vehicle as the vehicle 1. The following installation examples apply to both embodiments of the lighting device 4 (the primary lighting device and the secondary lighting device).

### (Lighting device installation example 1)

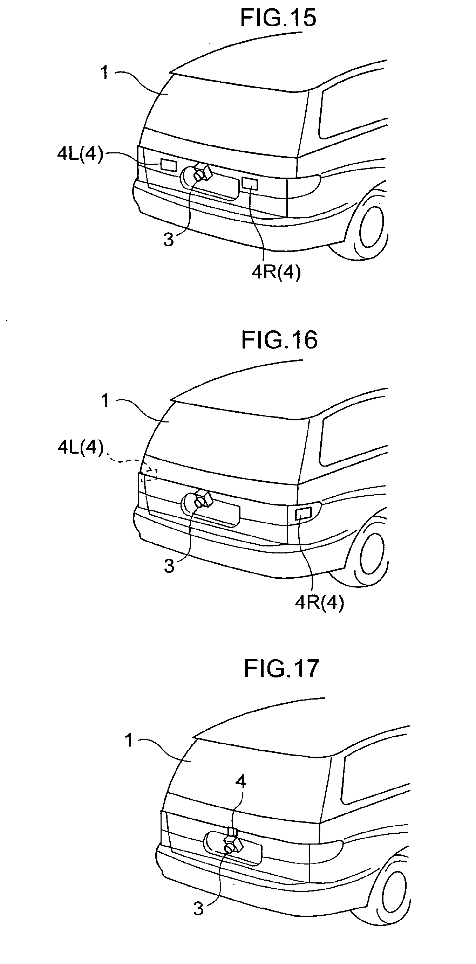

FIG. 15 is a perspective view depicting a first installation example of the lighting device 4. FIG. 15 shows an example in which the lighting device 4 is installed a prescribed distance from the camera 3 in the width direction of the vehicle 1. As shown in the diagram, the camera 3 is installed as the image-capturing device in the center area in the width direction of the vehicle 1. The lighting devices 4 (4L and 4R) are provided to a rear combination lamp unit (illumination device), along with brake lamps, tail lamps, reverse lamps, and the like (illumination devices).

### (Lighting device example installation 2)

FIG. 16 is a perspective view depicting a second installation example of the lighting device 4. FIG. 16 shows an example in which the lighting device 4 is installed a prescribed distance from the camera 3 in the width direction of the vehicle 1. As shown in the diagram, the camera 3 is installed as the image-capturing device in the center area in the width direction of the vehicle 1. The lighting devices 4 (4L and 4R) are provided to a rear combination lamp unit (illumination device), along with vehicle side lamps, turn signals, and the like (illumination devices).

### (Lighting device installation example 3)

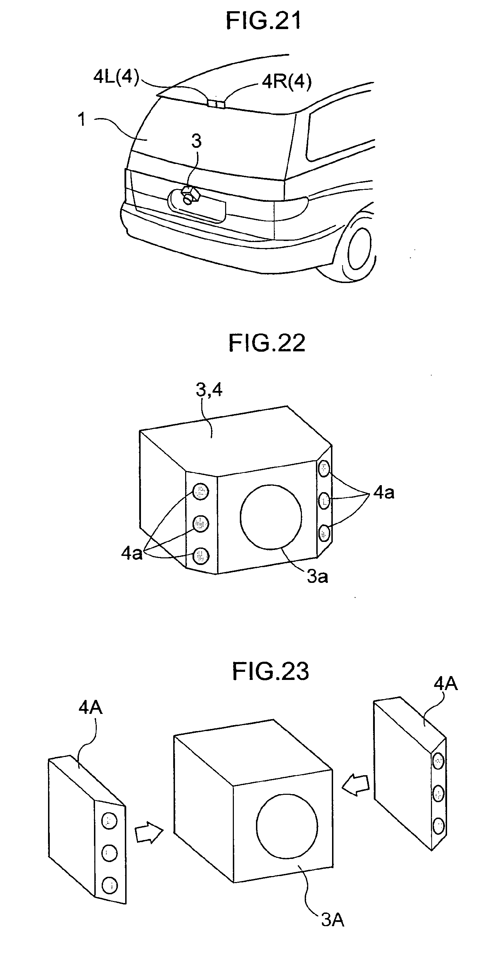

FIG. 17 is a perspective view depicting a third installation example of the lighting device 4. FIG. 17 shows an example in which the lighting device 4 is provided to the same location as the camera 3 in the width direction of the vehicle 1. Here, the lighting device 4 can be a single device that directs light in multiple directions, or may be multiple devices provided to a single location. In either case, as shown in the diagram, the lighting device 4 is provided along with the camera 3 onto a garnish, which is an external part of the vehicle 1. In this mode, it is also possible to provide the lighting device 4 to a license plate lamp, which is an illumination device provided to the license plate.
It is also possible to provide the lighting device 4 to the camera 3. In other words, it is possible to form the lighting device 4 and the camera 3 into an integrated unit. For example, as shown in FIG. 22, it is possible to form a single unit by providing the camera unit 3a (the camera 3) to the center, and providing lighting units 4a (lighting devices 4) on the left and right sides of the camera in slanted directions relative to the optical axis thereof. Also, as shown in FIG. 23, it is possible to position lighting members 4A (lighting devices 4) overlaying both sides of a camera member 3A (camera 3), or to have the camera member 3A and lighting materials 4A joined together.

### (Lighting device installation example 4)

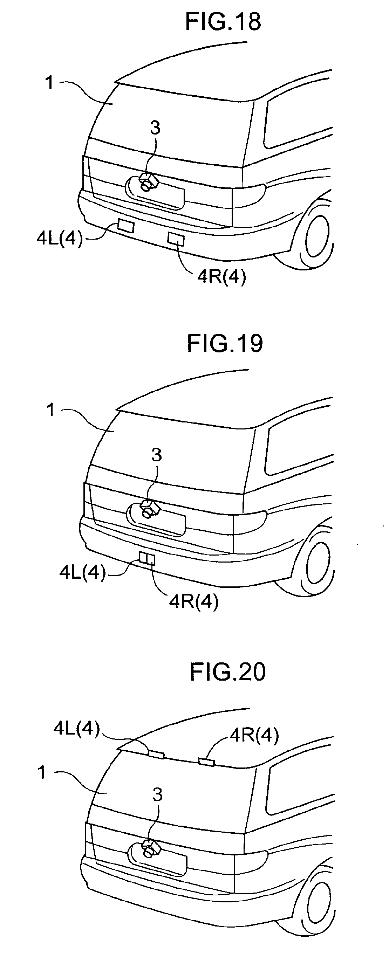

FIG. 18 is a perspective view depicting a fourth installation example of the lighting device 4. FIG. 18 shows an example in which the lighting device 4 is installed a prescribed distance from the camera 3 in the width direction of the vehicle 1. As shown in the diagram, the camera 3 is installed as the image-capturing device in the center area along the width direction of the vehicle 1, and the lighting devices 4 (4L and 4R) are provided to a bumper, which is an external part.

### (Lighting device installation example 5)

FIG. 19 is a perspective view depicting a fifth installation example of the lighting device 4. FIG. 19 shows an example in which the lighting device 4 is provided to the same location as the camera 3 in the width direction of the vehicle 1. Here, the lighting device 4 can be a single device that directs light in multiple directions, or may be multiple devices provided to a single location. As shown in the diagram, the lighting device 4 is installed separately from the camera 3 onto a bumper, which is an external part of the vehicle 1.

### (Lighting device installation example 6)

FIG. 20 is a perspective view depicting a sixth installation example of the lighting device 4. FIG. 20 shows an example in which the lighting device 4 is installed a prescribed distance from the camera 3 in the width direction of the vehicle 1. As shown in the diagram, the camera 3 is installed as the image-capturing device in the center area in the width direction of the vehicle 1, and the lighting devices 4 (4L and 4R) are provided to a spoiler, which is an external part. If an illumination device such as a brake light is provided to the spoiler, then the lighting device 4 can be installed along with that illumination device.

### (Lighting device installation example 7)

FIG. 21 is a perspective view depicting a seventh installation example of the lighting device 4. FIG. 21 shows an example in which the lighting device 4 is provided to the same location as the camera 3 in the width direction of the vehicle 1. Here, the lighting device 4 can be a single device that directs light in multiple directions, or may be multiple devices provided to a single location. As shown in the diagram, the lighting device 4 is installed separately from the camera 3 onto a spoiler, which is an external part of the vehicle 1. As in the case above, if an illumination device such as a brake light is provided to the spoiler, then the lighting device 4 can be installed along with that illumination device.

### INDUSTRIAL APPLICABILITY

The present invention can be applied to a vehicle vicinity monitoring system, a driving support system, or other system for detecting obstacles existing in the vicinity of a vehicle and providing vehicle occupants with information related to those obstacles.

### BRIEF DESCRIPTION OF THE DRAWINGS

FIG. 1 is a perspective view depicting an example of the vehicle vicinity monitoring system pertaining to the present invention when mounted onto a vehicle;
FIG. 2 is a block diagram depicting an overview of the vehicle vicinity monitoring system pertaining to the present invention;
FIG. 3 is a descriptive diagram indicating an initial movement when the vehicle 1 is parallel parking behind a parked vehicle 2, which is used as the obstacle;
FIG. 4 is a descriptive diagram that shows an example where a shadow of an obstacle is created in the imaging field of the camera;
FIG. 5 is a diagram showing an example of a captured image taken in FIG. 4;
FIG. 6 is a descriptive diagram that shows examples of positioning of the lighting device and the image-capturing device;
FIG. 7 is a descriptive diagram showing an example of a method of illumination using the lighting device;
FIG. 8 is a descriptive diagram showing an example wherein the effects of a shadow are reduced using the positioning shown in FIG. 6(a);
FIG. 9 is a descriptive diagram showing an example wherein the effects of a shadow are reduced using the positioning shown in FIG. 6(b);
FIG. 10 is a diagram showing an example of an image captured in FIGS. 8 and 9;
FIG. 11 is a descriptive diagram showing another example of a method of illumination using the lighting device;
FIG. 12 is a descriptive diagram showing an example wherein a slit pattern is projected by the lighting device in FIG. 11;

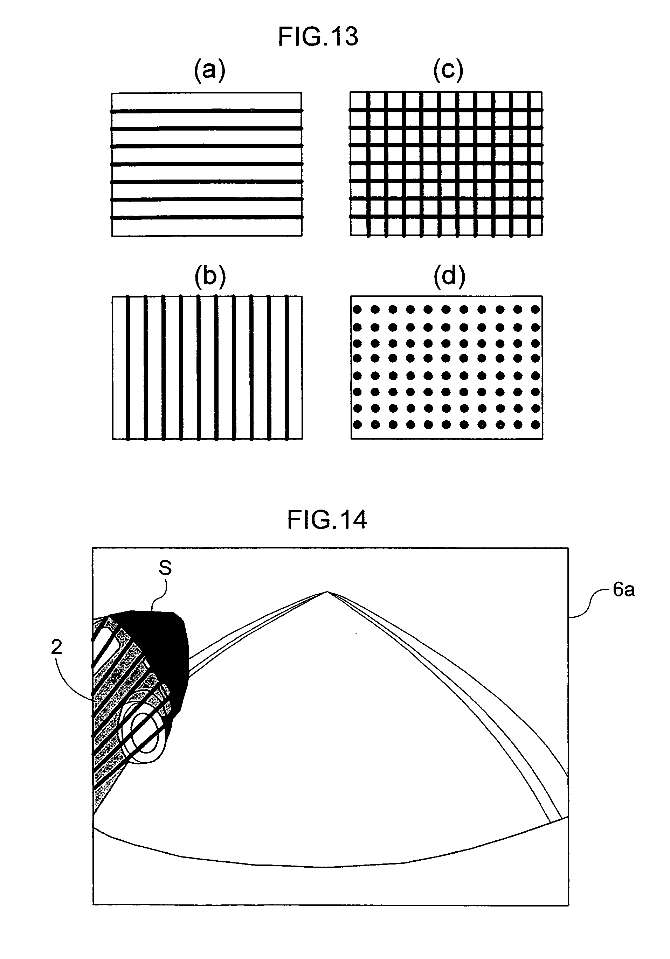

FIG. 13 is a diagram showing examples of prescribed patterns projected by the lighting device;
FIG. 14 is a diagram showing an example of a captured image taken when the prescribed pattern of FIG. 13(a) is projected;
FIG. 15 is a perspective view showing a first lighting device installation example;
FIG. 16 is a perspective view showing a second lighting device installation example;
FIG. 17 is a perspective view showing a third lighting device installation example;
FIG. 18 is a perspective view showing a fourth lighting device installation example;
FIG. 19 is a perspective view showing a fifth lighting device installation example;
FIG. 20 is a perspective view showing a sixth lighting device installation example;
FIG. 21 is a perspective view showing a seventh lighting device installation example;
FIG. 22 is a perspective view showing an example wherein the image-capturing device and the lighting device are combined in a single unit; and
FIG. 23 is a descriptive diagram showing another example wherein the image-capturing device and the lighting device are combined in a single unit.

- 1: VEHICLE
- 2: PARKED VEHICLE (AN OBSTACLE)
- 3: CAMERA (IMAGE-CAPTURING DEVICE)
- 4, 4A, 4B, 4A, 4B, 4L, 4R: LIGHTING DEVICE
- 6: NOTIFICATION DEVICE
- 6A: MONITOR (NOTIFICATION DEVICE)
- 6B: SPEAKER (NOTIFICATION DEVICE)
- V: IMAGING FIELD
- VS: ANGLE OF VISION
- S: SHADOW

## Claims

1. A vehicle vicinity monitoring system for using an image-capturing device to capture an image of a scene in the vicinity of a vehicle, and using a notification device to provide vehicle occupants with information concerning obstacles in the vicinity of the vehicle, wherein:
a primary lighting device, or a secondary lighting device, or both a primary lighting device and a secondary lighting device are provided to the vehicle;
the primary lighting device is a lighting device wherein the illumination of an illumination device provided to the vehicle directs light on an obstacle shadow created within the imaging field of the image-capturing device, whereby the shadow is minimized and the border of the obstacle is made to stand out; and
the secondary lighting device is a lighting device for projecting light in a prescribed pattern within the imaging field of the image-capturing device in order to confirm the existence of the obstacle.

2. The vehicle vicinity monitoring system according to claim 1, wherein:
a direction that is the same as the angle of vision from the image-capturing device to the obstacle is used as a reference, and the primary lighting device directs light outward from the vehicle relative to that direction.

3. The vehicle vicinity monitoring system according to claim 1 or claim 2, wherein:
a plurality primary lighting devices is provided, and the lighting devices direct light in prescribed directions to the left and right of the vehicle in the width direction thereof.

4. The vehicle vicinity monitoring system according to claim 1, wherein:
movement state detecting means for detecting the direction in which the vehicle is traveling is provided, and the primary lighting devices direct light in the prescribed directions based on the detecting results obtained from the movement state detecting means.

5. The vehicle vicinity monitoring system according to claim 1, wherein:
the image-capturing device is provided to the vehicle in a central area along the width direction;
the primary lighting devices are provided to the vehicle on the left and right along the width direction; and the primary lighting devices collectively direct light on at least the imaging field at their own respective intensity level.

6. The vehicle vicinity monitoring system according to claim 5, wherein:
the primary lighting devices switch between illumination intensity so that one illumination intensity is stronger and the other illumination intensity is weaker.

7. The vehicle vicinity monitoring system according to claim 1, wherein:
the secondary lighting device directs light in at least the left or right prescribed direction along the width direction of the vehicle.

8. The vehicle vicinity monitoring system according to claim 7, wherein:
the prescribed pattern is a straight-line slit pattern, a lattice pattern, or a dotted pattern.

9. The vehicle vicinity monitoring system according to claim 1, wherein:
the image-capturing device has a sensitivity to near-infrared light; and
the secondary lighting device projects light that includes, in whole or in part, near-infrared light.

10. The vehicle vicinity monitoring system according to claim 1, wherein:
the primary lighting device is provided to the illumination device on the vehicle; and
the illumination device is one of a brake lamp, tail lamp, reverse lamp, turn signal, license plate lamp, or a combination lamp that comprises a plurality of these.
